# FASCICULE DE BREVET EUROPEEN

(11) **EP 1 961 014 B1**
(45) Date de publication et mention de la délivrance du brevet: **26.02.2014**
(21) Numéro de dépôt: 06830437.7
(22) Date de dépôt: 07.12.2006
(51) Int. Cl.: G21F 9/00, G21C 21/02

(54) **DISPOSITIF ET PROCÉDÉ DE DÉCONTAMINATION AUTOMATISÉE D'UN CRAYON DE COMBUSTIBLE NUCLÉAIRE**
VORRICHTUNG UND VERFAHREN ZUR AUTOMATISIERTEN DEKONTAMINIERUNG EINES KERNBRENNSTABS
DEVICE AND METHOD FOR AUTOMATED DECONTAMINATION OF A NUCLEAR FUEL ROD

(30) Priorité: 09.12.2005 FR 0553810
(43) Date de publication de la demande: 27.08.2008
(73) Titulaire: Areva NC, 75009 Paris (FR)
(72) Inventeur: DICTOR, Alain, F-07700 Saint Just d'Ardeche (FR); FISCHER, Marc, F-26200 Montelimar (FR)
(74) Mandataire: Ahner, Philippe
(86) Numéro de dépôt international: PCT/EP2006/069428
(87) Numéro de publication internationale: WO 2007/065928

(56) Documents cités:
- EP-A- 0 749 919
- WO-A-95/19033
- FR-A- 2 072 423
- FR-A- 2 774 801
- US-A- 4 580 185
- US-A- 5 430 593

## Description

### DOMAINE TECHNIQUE

L'invention concerne la fabrication des crayons de combustible nucléaire, et notamment leurs nettoyage et décontamination surfaciques.

L'invention se rapporte en particulier à un nouveau procédé automatisé de suppression des dépôts éventuels de résidus par l'utilisation d'une ou plusieurs bandes coulissant le long de la surface d'un objet cylindrique. L'invention a pour autre objet un dispositif adapté.

### ÉTAT DE LA TECHNIQUE ANTÉRIEURE

Un crayon de combustible nucléaire pour réacteur à eauest constitué de pastilles de combustible d'un diamètre de l'ordre de 8 mm, tel que notamment UO₂ ou mélange UO₂-PuO₂, enfilées l'une à la suite de l'autre dans une gaine métallique, classiquement en alliage au zirconium d'une longueur de l'ordre de 4 m. Les crayons peuvent être entreposés avant formation d'assemblages destinés à être chargés en réacteur.

Les crayons de combustible, une fois produits, ne dégagent pas de radioactivité en tant que tels. Cependant, en particulier lors de l'introduction des pastilles issues de poudre frittée, des particules de combustible peuvent être générées et déposées à leur surface. La contamination du crayon causée par ces résidus doit être retirée au vu des critères stricts de radioactivité tolérée et/ou acceptable.

A cette fin, avant la sortie du crayon de la boîte à gants de fabrication, il est usuel qu'une étape de décontamination soit prévue, en particulier pour le bouchon supérieur du crayon et la surface adjacente. La décontamination ne doit bien entendu pas altérer la gaine des crayons ; il est de plus souhaitable qu'elle soit totalement automatisable, relativement rapide, et ne génère pas un encombrement inacceptable dans la boîte à gants.

Différentes techniques ont été développées. Par exemple, des jets sous pression de gaz ou de solution (EP 0 100 428) peuvent permettre de retirer le dépôt des particules submicroniques de combustible, mais génèrent des effluents qu'il est difficile et coûteux de traiter. D'autres systèmes, comprenant par exemple des décharges par électrodes (GB 1 382 915), sont très lourds à mettre en oeuvre ; la décontamination par laser (FR 2 774 801) a été envisagée, mais reste d'emploi très complexe.

La technique la plus simple demeure la décontamination tribologique par utilisation d'un tissu en viscose, polyester ou coton, sec ou imbibé d'alcool, qui est cependant largement dépendante d'opérateurs humains.

Une automatisation a certes été décrite dans le document FR 2 072 423, où le crayon est animé d'un mouvement rotatif et son extrémité est amenée au contact d'une bande de nettoyage déroulante. Cette solution est cependant limitée géographiquement à l'extrémité du crayon, et n'a pas montré son efficacité au vu du manque de fiabilité dans la pression exercée entre bande et crayon.

### EXPOSÉ DE L'INVENTION

L'invention dans son ensemble propose, parmi autres avantages, de pallier les inconvénients décrits ci-dessus, et de développer une décontamination tribologique (par frottis à bande) automatisée. Le procédé et le dispositif selon l'invention sont en particulier destinés à ramener la contamination de crayons après engainage à un niveau inférieur aux spécifications environnementales, mais peuvent être appliqués à d'autres usages.

Sous un de ses aspects, l'invention se rapporte à un procédé de nettoyage de surface d'un tronçon de crayon de combustible nucléaire par défilement d'une bande. L'invention trouve une application particulière dans la décontamination de crayons de combustible nucléaire, et au nettoyage des crayons avant leur scellement.

Le procédé de décontamination selon l'invention comprend la mise en place du tronçon de crayon de combustible à décontaminer à une position prédéterminée, la mise en tension de la bande autour du cylindre, et le déplacement de la bande selon une direction perpendiculaire à l'axe du cylindre. Au cours du nettoyage par un procédé selon l'invention, la tension de la bande reste constante ; le tronçon de cylindre peut être maintenu fixe ou il peut subir une translation le long de son axe, de vitesse de déplacement constante ou comprenant des plages de ralentissement afin de se focaliser sur une portion du tronçon ; cette translation peut être accompagnée d'une légère rotation, de sorte que le crayon soit animé d'un mouvement hélicoïdal, mais il est préférable que le tronçon soit maintenu dans la même position angulaire tout au long du procédé.

Selon un mode de réalisation de l'invention, une fois que le tronçon de crayon a été nettoyé lors d'au moins un passage en translation sans rotation, le cylindre subit une rotation autour de son axe et est repositionné au point prédéterminé, afin que la bande soit en contact avec un arc différent du premier : le procédé est ainsi répété pour aboutir à un nettoyage périphérique complet.

Selon un mode préféré, le procédé selon l'invention opère le nettoyage surfacique par au moins deux bandes simultanément, les bandes étant localisées l'une après l'autre dans le sens de translation du cylindre, avantageusement en, rotation inversée d'une bande par rapport à l'autre, et de préférence exerçant la même pression sur le crayon. En particulier, la pluralité de bandes définit des arcs de contact complémentaires avec le tronçon de cylindre, par exemple deux bandes couvrent deux demi cylindres opposés l'un de l'autre.

Le procédé selon l'invention peut être exercé à sec et/ou humide, avec injection de liquide sur la bande, en particulier dans le cas d'une décontamination finale.

L'invention se rapporte aussi à un dispositif adapté au procédé. De préférence, le dispositif dans son ensemble peut être placé dans une boîte à gants.

Le dispositif comprend un système permettant de dérouler une bande ; en particulier, le système de déroulement comprend un rouleau d'entraînement et un rouleau entraîné d'axes parallèles à l'axe d'un cylindre à nettoyer. Des moyens de positionnement automatisé d'une bande sont localisés sur un trajet allant du rouleau d'entraînement au rouleau entraîné en passant autour du crayon, les moyens étant adaptés pour que l'arc du crayon entouré par la bande soit constant, et pour que le crayon puisse être mis en place sans entrer en contact avec la bande. Notamment, les moyens de positionnement comprennent un dispositif permettant de déplacer la bande radialement par rapport à l'axe du crayon pour permettre un passage sans friction du crayon sur la bande. Les moyens de positionnement peuvent également comprendre un culbuteur assurant une tension constante ; de préférence, l'arc d'enroulement fait la moitié du crayon.

Le dispositif peut comprendre des moyens pour déplacer un crayon en translation et lui donner une position angulaire déterminée.

Avantageusement, des moyens de contrôle sont prévus, par exemple un capteur de rupture de bande, un système de frein sur le rouleau entraîné, un capteur de position du crayon, des moyens de détermination des vitesses de la bande et/ou du crayon.

De préférence, le dispositif comprend une pluralité de systèmes permettant de dérouler une bande, avantageusement identiques, localisés le long de l'axe du crayon et définissant des arcs d'enroulement différents, de préférence complémentaires.

### BRÈVE DESCRIPTION DES DESSINS

Les caractéristiques et avantages de l'invention seront mieux compris à la lecture de la description qui va suivre et en référence aux dessins annexés, donnés à titre illustratif et nullement limitatifs.
La figure 1 illustre schématiquement un module de fabrication d'un crayon de combustible nucléaire dans lequel peut être implémenté un dispositif selon l'invention.
Les figures 2A et 2B montrent un mode de réalisation préféré du dispositif selon l'invention.
Les figures 3A et 3B représentent l'état de décontamination selon un autre mode de réalisation préféré de l'invention.

### EXPOSÉ DÉTAILLÉ DE MODES DE RÉALISATION PARTICULIERS

La contamination radioactive totale d'un échantillon, comme un crayon de combustible, consiste en une contamination dite labile, ou transférable, résultant d'un dépôt surfacique de particules, et éventuellement en une contamination fixée ; les critères normatifs pour un crayon sont une contamination résiduelle totale inférieure à 0,8 Bq/cm² et une contamination résiduelle labile inférieure à 4.10⁻² Bq/cm².

Le procédé selon l'invention agit principalement sur la contamination labile ; cependant, par l'injection de liquide notamment, une suppression de particules incrustées peut également être obtenue.

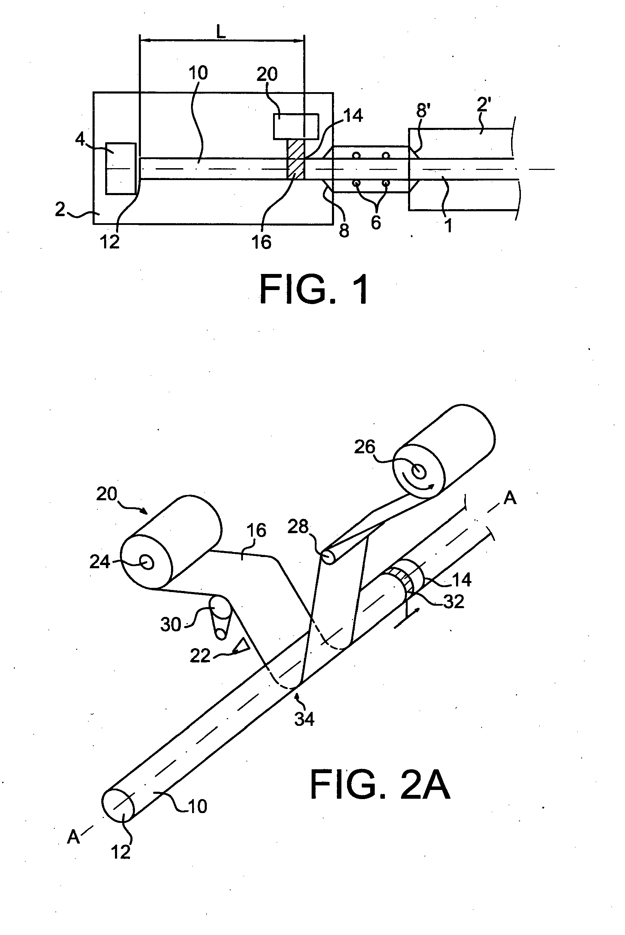

La fabrication des crayons 1 est effectuée dans un système de boîtes à gants illustré en figure 1. Les boîtes à gants forment ainsi des modules étanches 2, 2' fonctionnels, dans lesquels les crayons 1, d'un diamètre usuel d'environ 9,5 à 12,5 mm, pour une longueur de l'ordre de 4 m, sont au moins partiellement insérés, pour venir se connecter avec des ancillaires 4 tels que des bouchons ou nez d'engainage facilitant les opérations, par déplacement par des mécanismes 6 adaptés qui permettent leur translation et leur rotation. En particulier, pour le chargement des pastilles, une gaine de crayon 1 est introduite par une traversée étanche 8 dans un module hermétique 2 dédié au remplissage, et s'accoste sur un nez d'engainage 4 spécialement conçu pour limiter la formation de résidus de pastilles. De fait, seule la partie 10 de la gaine 1 proche du nez d'engainage insérée dans le module 2 est susceptible d'être contaminée.

A la fin de cette étape, le crayon 1 est ouvert et rempli de pastilles constituant une colonne légèrement moins longue que le crayon 1 ; on considère habituellement que la partie 10 du crayon 1 susceptible d'être souillée s'étend sur une longueur L de l'ordre de 50 mm pour cette étape. Cette étape de remplissage est normalement conclue par une opération qualifiée de « nettoyage périphérique frontal », se déroulant dans un autre module fonctionnel 2, qui vise à éliminer les résidus sur la partie 10 sujette à contamination.

Le crayon 1 est ensuite transféré à un autre module de travail 2, dans lequel un ressort est mis en place à l'intérieur de la gaine, afin d'assurer la jonction entre les pastilles tout en tolérant une modification du volume du gaz contenu dans la gaine lors des opérations de fission. Un bouchon permet alors de fermer le crayon 1 ; la solidarisation est effectuée par un soudage circulaire du bouchon sur la gaine, puis une mise en pression avant scellement (ou queusotage, axial ou radial).

Le crayon 1 est prêt ; mais avant d'être stocké, il subit habituellement une dernière opération qualifiée de « décontamination finale », qui élimine les résidus éventuels. Le tronçon 10 ainsi décontaminé couvre ici souvent une longueur minimale L de 500 mm à partir de l'extrémité 12 d'entrée ou de bouchon supérieur du crayon 1, allant jusqu'à la totalité de la gaine.

Le procédé et le dispositif selon l'invention sont adaptés pour ces deux opérations de « nettoyage périphérique frontal » et « décontamination finale », en modifiant éventuellement quelques paramètres. Pour des raisons de concision, les deux opérations seront indifféremment appelées par la suite nettoyage, ou décontamination, surfaciques par bande, et concernent un tronçon 10 de crayon 1 s'étendant le long de son axe AA entre une première extrémité d'entrée 12 et une extrémité proximale 14 distantes d'une longueur L pouvant atteindre la longueur totale du crayon 1. Plus particulièrement, dans le cadre préféré de réalisation, le dispositif 20 selon l'invention est adapté à la décontamination de la partie terminale 10 d'un crayon de combustible nucléaire 1, soit un tronçon 10 d'extrémité de cylindre 1 de diamètre de l'ordre de 9,5 à 12,5 mm, et d'une longueur L d'environ 50 ou 500 mm ; le dispositif et le procédé peuvent également être utilisés pour une « réparation » de crayons, c'est-à-dire sur une portion 10 du crayon qui n'est pas terminale.

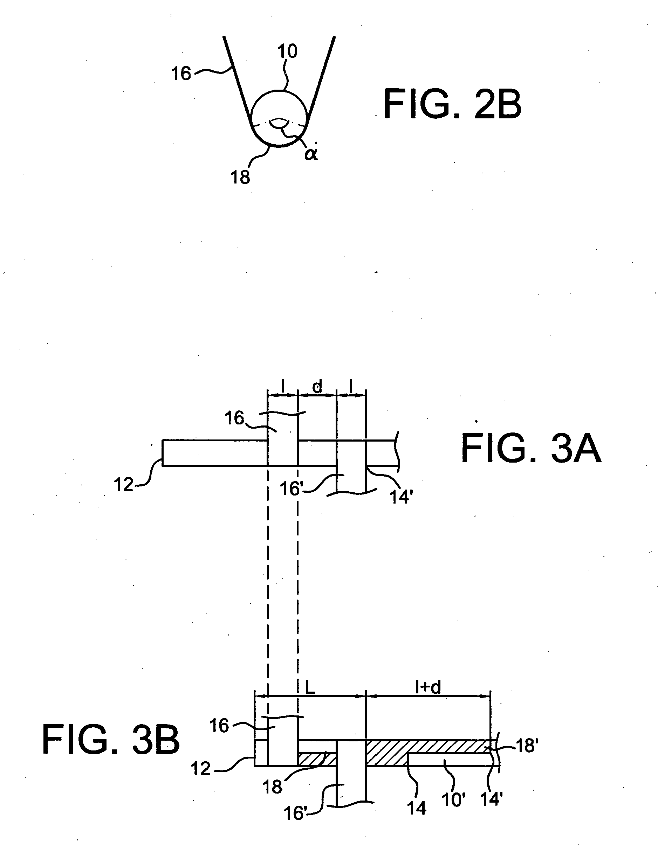

Le dispositif de décontamination selon l'invention, schématisé en figure 2A, permet de réaliser de façon automatisée, contrôlée et reproductible un frottis d'une bande 16 de tissu sur la surface d'un tronçon cylindrique 10. Dans cette application particulière, la bande 16 est mise en place autour d'un arc 18 de la périphérie du tronçon 10 (voir figure 2B), une certaine tension lui est appliquée, puis la bande 16 subit un mouvement relatif par rapport au cylindre 1, dans une direction orthogonale à l'axe AA de la gaine 10. Le nettoyage peut avoir lieu à sec, ou il peut être associé à l'injection de liquide, habituellement de l'alcool, pour humidifier la bande 16 (le facteur de décontamination labile peut ainsi par exemple passer de 2,5 pour le nettoyage à sec à plus de 10).

La bande 16 est adaptée à son utilisation spécifique ; en particulier, il est souhaitable qu'elle n'altère pas la surface du crayon 1. De préférence, le coefficient d'arrachement des poussières labiles de la bande 16 est optimisé ; si une décontamination « humide » est envisagée, il est en outre préférable que la bande 16 ne soit pas trop absorbante, afin de permettre une consommation moindre en liquide à recycler. Avantageusement, il s'agit d'un tissu en coton de type Vanneuville ; la largeur 1 de à bande 16 est avantageusement de 60 mm afin d'assurer un compromis optimal entre vitesse de décontamination et régularité de la tension exercée sur la bande 16 au niveau de la gaine 10. Une bande abrasive adaptée peut cependant être préconisée dans les cas de (dé)contamination forte, et utilisée dans le même dispositif 20 selon l'invention.

Avantageusement, des moyens, tels une buse d'injection 22, permettent l'humidification de la bande 16, afin de pouvoir éventuellement procéder à une décontamination humide, classiquement avec de l'alcool.

La bande 16 est, tel qu'usuel, de préférence stockée sous forme de bobine, comprenant par exemple de 100 à 150 m de longueur utile de bande. Elle est animée d'un mouvement de translation ; pour le déroulement, tel qu'il est classique, le dispositif 20 comprend un ensemble de deux rouleaux : un rouleau distributeur 24 permet d'alimenter le système en bande 16 de décontamination propre, et un rouleau receveur 26 permet d'enrouler la bande « sale » ; l'axe des rouleaux 24, 26 peut par exemple être de l'ordre de 40 mm ou 50 mm, afin que le diamètre maximal des bobines soit de l'ordre de 200 mm. Avantageusement, la bobine débitrice est libre en rotation, le rouleau 24 étant équipé de préférence d'un couple résistant mécanique assurant la tension de la bande 16. La bobine réceptrice et son rouleau 26 sont entraînés par une motorisation : un ensemble galet/moteur escamotable, de préférence équipé d'un réducteur et d'un sens de marche à deux vitesses, permet par exemple de tracter la bande 16 par pincement.

L'ensemble des rouleaux 24, 26 est de préférence configuré pour un couple de réglage de 2,5 mN, ce qui permet un effort sur le tissu de la bande 16 de 12,5 N lorsque la bobine est vide et 2,5 N lorsqu'elle est pleine.

Pour l'opération de nettoyage, la bande 16 est placée en contact avec le crayon 1 entre les deux rouleaux 24, 26 : des moyens 28, 30, tels un cabestan, un ensemble de rouleaux et/ou poulies directionnelles et/ou galets de détour bombés, permettent de positionner et maintenir centrée la bande 16 sur le crayon 1 afin d'optimiser son trajet et de l'entourer sur un arc 18 d'angle α prédéterminé en respectant la vitesse de défilement et la tension de la bande 16 préconisées. En particulier, un culbuteur 30 peut être positionné sur le trajet de la bande 16, en amont du crayon 1, pour autoriser des mouvements relatifs et compenser d'éventuelles irrégularités dans le cheminement de la bande 16.

Lors de la mise en place de la bande 16 sur le crayon 10, aucun frottement n'a lieu : les moyens de positionnement 28, 30 sont associés à un dispositif permettant le mouvement en direction perpendiculaire à l'axe AA du crayon 1 ; par exemple, le cabestan 28 est monté sur un vérin pneumatique rotatif double effet piloté par un distributeur à commande électropneumatique bistable sous fluide azote afin de pouvoir libérer le passage du cylindre 1. Une fois la bande 16 et le tronçon 10 mis en place, un dispositif 20 permet le déplacement de la bande 16 entre les deux rouleaux 24, 26, de sorte que sa friction avec le cylindre décontamine la gaine.

L'ensemble 20 des différents éléments est avantageusement localisé dans la boîte à gants 2, et composé de matériaux non contaminants.

Suivant la longueur L du tronçon 10 et la largeur 1 de la bande 16, ce seul passage peut ne pas suffire. Il est alors souhaitable que l'élément cylindrique 10 soit animé d'un mouvement de translation le long de son axe AA : des moyens adaptés permettent le mouvement. Il est préférable que l'élément cylindrique 10 ne subisse pas de rotation autour de son axe AA : le même arc de surface 18 à bords parallèles à l'axe AA est nettoyé par la bande 16 sur toute la longueur de déplacement, afin d'obtenir une décontamination homogène de l'arc 18 concerné. Il est cependant possible d'associer une légère rotation du cylindre 1 lors de sa translation pour une décontamination finale sur une grande longueur de crayon : le mouvement hélicoïdal à large pas permet d'éviter une ligne de jonction entre plusieurs passages lorsque la distance couverte dépasse 100 mm.

Un élément de guidage, notamment un rail ou des rouleaux, permettent de diriger la gaine 1 au sein du module de décontamination 2 perpendiculairement aux axes des rouleaux 24, 26 et donc au déplacement de la bande 16 ; par ailleurs, des moyens 32 permettent de maintenir le crayon 1 en rotation et de le déplacer en translation selon son axe AA. Avantageusement, il s'agit du même dispositif 32 permettant le déplacement en translation du crayon 1 et son maintien autour de son axe AA, par exemple un mandrin rotatif monté sur un chariot en translation ; les mouvements de translation et de rotation peuvent ainsi être couplés ou découplés.

Selon l'organisation des modules, le nettoyage peut être effectué par « avance » du crayon, c'est-à-dire que le crayon est nettoyé alors qu'il traverse le module de part en part ; il est possible également que la translation du crayon s'effectue lors de son recul, en particulier si seule une petite partie d'extrémité est concernée : le crayon 1 est entré au plus long dans le module 2 de nettoyage, et sera extrait de ce module 2 conjointement avec le passage de la bande 16 et la décontamination. Par « proximale », on entendra par la suite l'extrémité de « début » de décontamination, et par « distale » l'extrémité de fin de décontamination, le tronçon 10 se déplaçant par « recul » entre l'extrémité proximale et l'extrémité distale.

Ainsi par exemple, pour une décontamination finale en sortie du queusotage, le crayon 1 est entré dans le premier module 2, la bande 16 étant en position lâche autour de l'axe AA ; la bande 16 est plaquée sur le crayon 1 par action sur le cabestan 28, avec exercice d'une pression par le culbuteur 30, son extrémité en aval étant positionnée sur l'extrémité proximale 14 du tronçon (un capteur de position 34 peut être associé au dispositif 20) ; la bande 16 couvre un arc 18 de la périphérie du cylindre 1, en particulier un arc de α = 360/n°, avec n entier. Ensuite, le nettoyage en lui-même commence : conjointement, la bande 16 avance, et le crayon 1 recule, jusqu'à l'éventuel décrochement de la bande 16 du bout 12 du crayon 1.

Pour éviter l'asservissement du mouvement hélicoïdal, il est possible de découpler entièrement les deux mouvements, et de faire avancer le crayon 1 pas à pas selon la séquence suivante :
i) mise en pression de la bande 16 sur le crayon 1 ;
ii) avance de la bande 16 ;
iii) arrêt de la bande 16 ;
iv) rotation du crayon 1 de α = 360/n° par action sur les moyens 28, 30 de positionnement de bande 16 ;
v) répétition des étapes ii) à iv) n fois ;
vi) libération de la pression de la bande 16 sur le crayon 1 ;
vii) translation du crayon 1 de la largeur 1 de la bande 16 ;
viii) répétition des étapes i) à vi) au moins L/1 fois, c'est-à-dire tant que L n'est pas atteinte.

Ce procédé saccadé est adapté particulièrement pour les réparations, où la longueur L n'est pas très élevée (L/1 ≤ 3), mais il est cependant générateur d'erreurs et consommateur de temps.

Avantageusement, les déplacements de la bande 16 et du crayon 1 sont simultanés : une fois la bande 16 mise en tension autour du tronçon 10, la bande 16 est déroulée, à vitesse constante si uniformité et reproductibilité sont particulièrement souhaitées, alors que le crayon 1 est reculé à vitesse déterminée. Un nettoyage de l'arc 18 d'angle α = 360/n° est ainsi réalisé sur la longueur L du tronçon 10.

Afin d'assurer le nettoyage de la totalité de la surface, le crayon 1 est alors replacé en position initiale, c'est-à-dire avancé jusqu'à ce que son extrémité proximale 14 se situe face à l'extrémité avant de la bande 16, en subissant une rotation de 360/n°, telle que l'arc α' couvert par la bande 16 soit adjacent au premier ; ou alors, le crayon est tourné de 360/n° puis nettoyé par pression de la bande 16 de son extrémité proximale 14 à son extrémité distale 12. Cette étape est répétée n fois, de façon à obtenir une décontamination de la périphérie totale. Par exemple, si le cabestan 28 et le culbuteur 30 permettent à la bande 16 de couvrir un angle α de 180°, deux passages entre bande 16 et crayon 1 sont suffisants pour un nettoyage de la surface périphérique ; on peut aussi avoir 3 passages à 120°, ou 4 à 90° ; il est possible également d'effectuer plusieurs fois la décontamination (avec par exemple quatre passages à 180°).

Avantageusement, on procède parallèlement à une décontamination des guides entrée/sortie 8 du module 2 entre deux passages.

De préférence, pour optimiser le temps de nettoyage, plusieurs bandes 16, 16' sont disposées le long du tronçon 10. Avantageusement, elles recouvrent chacune des arcs 18, 18' d'angles α complémentaires ou identiques ; en particulier, deux bandes 16, 16' sont disposées l'une derrière l'autre le long de l'axe AA en recouvrant chacune 180° opposés : lors d'un seul passage du crayon 1, la surface totale est alors décontaminée. Chaque bande 16, 16' est associée à des moyens similaires de positionnement et mise en tension.

Il est possible aussi de combiner les deux solutions, et de disposer par exemple deux bandes 16, 16' pour couvrir α + α' = 180° puis effectuer un deuxième passage après rotation d'un demi-tour du crayon 1.

Dans le cas où plusieurs bandes sont utilisées simultanément, il peut être important de prendre en compte la largeur 1 de la bande 16 et l'espacement d entre les bandes 16, 16' : tel qu'illustré sur les figures 3, une partie de la surface du tronçon 10 ne sera décontaminée que par la bande 16' située en amont. La position 14' de mise en place du tronçon 10 est donc avancée d'autant, et la longueur partiellement nettoyée est L + e + d. Il est ainsi souhaitable d'utiliser seulement deux bandes 16, 16' afin de minimiser la partie incomplètement décontaminée.

La séquence de décontamination par deux bandes devient ainsi par exemple :
i) descente des cabestans 28 ;
ii) positionnement du tronçon 10' en position de nettoyage ;
iii) mise en tension des bandes 16, 16' sur le tronçon 10' à partir d'une cote 14' définie en fonction de la distance L à nettoyer ;
iv) déroulement des bandes 16, 16' et déplacement du crayon 1 jusqu'à son extrémité 12.

Il peut être souhaitable d'insister sur le nettoyage d'une partie du tronçon 10, *a priori* plus susceptible d'être contaminée, par exemple en ralentissant, voire arrêtant, la translation du crayon 1 à son voisinage. En particulier, une temporisation peut être permise lorsque la bande 16 parvient à l'extrémité 12 du crayon 1 avant qu'elle ne s'en dégage. A cette fin, avantageusement, un capteur 34 détermine le déplacement du tronçon 10 ; de préférence, le capteur 34 peut être associé à des moyens permettant de paramétrer la longueur L à nettoyer. Une telle temporisation peut bien entendu être effectuée à tout endroit du tronçon 10, en particulier dans le cas où une réparation a été effectuée.

Dans le cas d'un nettoyage à deux bandes, pour permettre un nettoyage approfondi homogène sur une telle portion, le crayon 1 est immobilisé alors que la première bande 16 continue à défiler, la deuxième bande 16' pouvant être arrêtée. Le crayon 1 est alors déplacé pour que la deuxième bande 16' soit aussi à la position de la portion précédente, et y reste en place pendant une durée de préférence identique à l'arrêt occasionné pour la première bande 16.

Par ailleurs, il est possible également d'utiliser temporairement l'injection de liquide sur la bande 16 pour des parties spécifiques du tronçon 10, ou sur toute sa longueur L. En particulier, dans le cas d'une décontamination finale, une décontamination à l'alcool proche du bouchon 12, sur une longueur L' de l'ordre de 300 mm est souhaitable ; avantageusement, il est précédé d'un nettoyage à sec sur la longueur L - L'.

Dans le cadre d'une configuration industrielle notamment, différents paramètres peuvent être réglés afin d'optimiser la décontamination, tant en termes de seuil final obtenu que de vitesse de réalisation du procédé : dans les cas usuels, la tension de la bande 16 devrait être supérieure à 1 kg, de préférence de l'ordre de 1,5 kg ; la vitesse de bande 16, 16' est de l'ordre de 40 mm/s pour la décontamination humide et de 10 mm/s pour le frottis sec, pour un déplacement du crayon de l'ordre de 50 mm/s. Les vitesses sont paramétrées pour être adaptée au niveau de contamination.

Avantageusement, il est souhaitable que tous les paramètres puissent être modifiés, et que le dispositif 20 selon l'invention soit associé à un système du type automate programmable afin d'adapter le nettoyage aux crayons 1 particuliers concernés. Par exemple, le système peut prévoir une saisie des paramètres concernant la distance L à nettoyer, le calcul de la cote 14' de positionnement du crayon 1 par rapport aux bandes 16 et en prenant en compte la largeur 1 et l'espacement d des bandes pour éviter un nettoyage partiel, la vitesse de translation du crayon, le temps de nettoyage de l'extrémité 12, le nombre de passages si la somme des arcs 18 ne fait pas 360°,...

Par ailleurs, le dispositif 20 selon l'invention comprend avantageusement des capteurs de rupture de bande et un capteur inductif sur chaque bande pour surveiller son défilement.

## Revendications

1. Dispositif (20) de décontamination surfacique d'un tronçon (10) de crayon de combustible nucléaire par frottis de bande (16) comprenant :
- des moyens de mise en place automatisée d'un crayon de combustible nucléaire (1) contenant le tronçon (10) le long de son axe (AA) ;
- un premier rouleau d'entraînement (26) apte à enrouler une bande (16) et un premier rouleau entraîné (24) apte à dérouler la bande (16), les rouleaux (24, 26) étant rotatifs selon des axes parallèles à l'axe (AA) du tronçon (10) de crayon ;
- des premiers moyens de positionnement (28, 30) de bande localisés sur le passage de la bande (16) circulant entre les deux premiers rouleaux (26, 28) et autour du tronçon (10) de crayon,
les moyens de positionnement (28, 30) étant mobiles de façon à déplacer la bande (16) radialement par rapport à l'axe (AA) du tronçon cylindrique (10) pour lui imposer de définir un premier arc de contact (18) déterminé sur le tronçon (10) du crayon et de prendre une position plus éloignée sans contact.

2. Dispositif selon la revendication 1 comprenant un deuxième rouleau d'entraînement apte à enrouler une bande (16'), un deuxième rouleau entraîné apte à dérouler la bande (16'), les deuxièmes rouleaux étant rotatifs selon des axes parallèles à l'axe (AA) du tronçon cylindrique (10) et décalés des premiers rouleaux (24, 26) le long de l'axe (AA) du tronçon cylindrique (10), et des deuxièmes moyens de positionnement de bande localisés sur le passage de la bande (16') circulant entre les deux deuxièmes rouleaux et autour du tronçon cylindrique (10), adaptés pour déplacer la bande (16') radialement par rapport à l'axe (AA) du tronçon cylindrique (10) et lui imposer de définir un deuxième arc de contact (18') déterminé autour du tronçon cylindrique (10) et de prendre une position plus éloignée sans contact.

3. Dispositif selon la revendication 2 dans lequel les premier et deuxième arcs (18, 18') de contact sont localisés dans deux plans radiaux différents du tronçon cylindrique (10).

4. Dispositif selon la revendication 3 dans lequel le deuxième arc (18') fait un angle (α') identique au premier arc (18).

5. Dispositif selon l'une des revendications 1 à 4 dans lequel les moyens de positionnement (28, 30) de la ou des bandes (16, 16') comprennent un culbuteur (30) permettant de fixer la tension de la (des) bande(s) (16, 16').

6. Dispositif selon l'une des revendications 1 à 5 dans lequel au moins un rouleau entraîné (24) comporte un frein.

7. Dispositif selon l'une des revendications 1 à 6 comprenant au moins un capteur de rupture de bande.

8. Dispositif selon l'une des revendications 1 à 7 comprenant une buse (22) d'injection de liquide sur une bande (16, 16').

9. Dispositif selon l'une des revendications 1 à 8 comprenant en outre des moyens (32) de guidage du tronçon cylindrique (10) dans un mouvement de translation le long de son axe (AA).

10. Dispositif selon la revendication 9 dans laquelle les moyens de guidage (32) sont aptes à maintenir le tronçon cylindrique (10) selon une pluralité de positions angulaires déterminées.

11. Dispositif selon l'une des revendications 9 à 10 comprenant des moyens pour déterminer la vitesse de rotation des rouleaux d'entraînement (26), et la vitesse de déplacement des moyens de guidage (32).

12. Dispositif selon l'une des revendications 9 à 11 comprenant un capteur (34) de position du tronçon cylindrique (10) par rapport à son axe de déplacement (AA).

13. Dispositif selon l'une des revendications 1 à 12 associé à une boîte à gants (2) dans laquelle il est localisé.

14. Procédé de décontamination périphérique automatique d'un tronçon (10) de crayon de combustible nucléaire (1) s'étendant longitudinalement le long de son axe (AA) entre une première et une deuxième extrémité (12, 14), par au moins une bande (16) se déplaçant dans un plan perpendiculaire à l'axe (AA) du crayon (1) comprenant les étapes successives :
- le positionnement automatisé de la bande autour de l'axe (AA) du crayon (1) à une distance supérieure au rayon du crayon (1);
- le positionnement automatisé de la première extrémité (14) du tronçon (10) à une position déterminée sur l'axe du crayon (AA) ;
- la mise en contact automatisée de la bande (16) sur un premier arc (18) du crayon (1);
- le déplacement de la bande (16) dans un plan perpendiculaire à l'axe (AA) du crayon (1) tel que sa tension sur le tronçon (10) reste inchangée.

15. Procédé selon la revendication 14 comprenant le nettoyage par une deuxième bande (16') mise en contact autour d'un deuxième arc (18') du crayon (1) en aval de la première extrémité (14).

16. Procédé selon la revendication 15 dans lequel les premiers et deuxièmes arcs (18, 18') font chacun un angle de 180°.

17. Procédé selon l'une des revendications 15 ou 16 dans lequel le déplacement des première et deuxième bandes (16, 16') est de vitesse et tension égales.

18. Procédé selon l'une des revendications 14 à 17 comprenant en outre le déplacement du crayon (1) le long de son axe (AA) vers la deuxième extrémité (12).

19. Procédé selon l'une des revendications 14 à 18 comprenant en outre l'injection de liquide sur la(les) bande(s) (16, 26') pendant une durée déterminée.

## Patentansprüche

1. Vorrichtung (20) zur Oberflächendekontamination eines Abschnitts (10) eines Kernbrennstabs durch Bandschleifen (16), umfassend:
- Mittel zur automatischen Positionierung eines Kernbrennstabs (1), der den Abschnitt (10) entlang seiner Achse (AA) enthält;
- eine erste Antriebsrolle (26), die zum Aufwickeln eines Bands (16) ausgelegt ist, sowie eine erste angetriebene Rolle (24), die zum Abwickeln des Bands (16) ausgelegt ist, wobei die Rollen (24, 26) um Achsen drehbar sind, die parallel sind zur Achse (AA) des Abschnitts (10) des Stabs;
- erste Mittel (28, 30) zur Positionierung des Bands, die an dem Weg des Bands (16) angeordnet sind, das zwischen den beiden ersten Rollen (26, 28) und um den Abschnitt (10) des Stabs herum zirkuliert;
wobei die Positioniermittel (28, 30) derart beweglich sind, dass das Band (16) radial bezüglich der Achse (AA) des zylindrischen Abschnitts (10) verlagert wird, um zu veranlassen, dass es einen ersten Kontaktbogen (18) definiert, der auf dem Abschnitt (10) des Stabs bestimmt ist, und eine weiter entfernte Position ohne Kontakt einnimmt.

2. Vorrichtung nach Anspruch 1, umfassend eine zweite Antriebsrolle, die zum Aufwickeln eines Bands (16') ausgelegt ist, eine zweite angetriebene Rolle, die zum Abwickeln des Bands (16') ausgelegt ist, wobei die zweiten Rollen um Achsen drehbar sind, die parallel sind zur Achse (AA) des zylindrischen Abschnitts (10) und von den ersten Rollen (24, 26) entlang der Achse (AA) des zylindrischen Abschnitts (10) versetzt sind, sowie zweite Mittel zur Positionierung des Bands, die an dem Weg des Bands (16') angeordnet sind, das zwischen den zwei zweiten Rollen und um den zylindrischen Abschnitt (10) herum zirkuliert, und die dazu ausgelegt sind, das Band (16') radial bezüglich der Achse (AA) des zylindrischen Abschnitts (10) zu verlagern und zu bewirken, dass es einen zweiten Kontaktbogen (18') definiert, der um den zylindrischen Abschnitt (10) herum bestimmt ist, und eine weiter entfernte Position ohne Kontakt einnimmt.

3. Vorrichtung nach Anspruch 2, bei der der erste und der zweite Kontaktbogen (18, 18') in zwei unterschiedlichen radialen Ebenen des zylindrischen Abschnitts (10) lokalisiert sind.

4. Vorrichtung nach Anspruch 3, bei der der zweite Bogen (18') einen zum ersten Bogen (18) identischen Winkel (α') bildet.

5. Vorrichtung nach einem der Ansprüche 1-4, bei der die Mittel (28, 30) zur Positionierung des Bands oder der Bänder (16, 16') eine Kippvorrichtung (30) umfassen, die das Fixieren der Spannung des Bands/der Bänder (16, 16') erlaubt.

6. Vorrichtung nach einem der Ansprüche 1-5, bei der wenigstens eine angetriebene Rolle (24) eine Bremse umfasst.

7. Vorrichtung nach einem der Ansprüche 1-6, umfassend wenigstens einen Bandrisssensor.

8. Vorrichtung nach einem der Ansprüche 1-7, umfassend eine Düse (22) zum Injizieren von Flüssigkeit auf ein Band (16, 16').

9. Vorrichtung nach einem der Ansprüche 1-8, ferner umfassend Mittel (32) zur Führung des zylindrischen Abschnitts (10) in einer Translationsbewegung entlang seiner Achse (AA).

10. Vorrichtung nach Anspruch 9, bei der die Führungsmittel (32) dazu ausgelegt sind, den zylindrischen Abschnitt (10) in einer Mehrzahl von bestimmten Winkelpositionen zu halten.

11. Vorrichtung nach einem der Ansprüche 9-10, umfassend Mittel zur Bestimmung der Drehgeschwindigkeit der Antriebsrollen (26) und der Verlagerungsgeschwindigkeit der Führungsmittel (32).

12. Vorrichtung nach einem der Ansprüche 9-11, umfassend einen Sensor (34) für die Position des zylindrischen Abschnitts (10) bezüglich seiner Verlagerungsachse (AA).

13. Vorrichtung nach einem der Ansprüche 1-12, die einem Handschuhkasten (2) zugeordnet ist, in dem sie angeordnet ist.

14. Verfahren zur automatischen Umfangsdekontamination eines Abschnitts (10) eines Kernbrennstabs (1) der sich longitudinal entlang seiner Achse (AA) zwischen einem ersten und einem zweiten Ende (12,14) erstreckt, mittels wenigstens eines Bands (16), das sich in einer zur Achse (AA) des Stabs (1) senkrechten Ebene verlagern lässt, umfassend die folgenden Schritte:
- das automatische Positionieren des Bands um die Achse (AA) des Stabs (1) herum in einem Abstand, der größer ist als der Radius des Stabs (1);
- das automatische Positionieren des ersten Endes (14) des Abschnitts (10) an einer bestimmten Position auf der Achse des Stabs (AA);
- das automatische in-Kontakt-bringen des Bands (16) an einem ersten Bogen (18) des Stabs (1);
- die Verlagerung des Bands (16) in einer zur Achse (AA) des Stabs (1) senkrechten Ebene derart, dass seine Spannung auf dem Abschnitt (10) unverändert bleibt.

15. Verfahren nach Anspruch 14, umfassend das Reinigen mittels eines zweiten Bands (16'), das in Kontakt um einen zweiten Bogen (18') des Stabs (1) gebracht ist, stromabwärts von dem ersten Ende (14).

16. Verfahren nach Anspruch 15, bei dem der erste und der zweite Bogen (18, 18') jeweils einen Winkel von 180° bilden.

17. Verfahren nach einem der Ansprüche 15 oder 16, bei dem die Verlagerung des ersten und des zweiten Bands (16, 16') mit gleicher Geschwindigkeit und Spannung erfolgt.

18. Verfahren nach einem der Ansprüche 14-17, ferner umfassend die Verlagerung des Stabs (1) entlang seiner Achse (AA) hin zum zweiten Ende (12).

19. Verfahren nach einem der Ansprüche 14-18, ferner umfassend das Injizieren von Flüssigkeit auf das Band/die Bänder (16, 16') während einer bestimmten Dauer.

## Claims

1. Device (20) for the surface decontamination of a length (10) of a nuclear fuel rod by wiping with a band (16), comprising:
- means for the automated positioning of a nuclear fuel rod (1) containing the length (10) along its axis (AA);
- a first drive roller (26) able to coil a band (16) and first driven roller (24) able to unwind the band (16), the rollers (24, 26) being rotational on axes parallel to the axis (AA) of the length (10) of rod;
- first means (28, 30) of positioning the band located on the passage of the band (16) circulating between the first two rollers (26, 28) and around the length (10) of the rod,
the positioning means (28, 30) being able to move so as to move the band (16) radially with respect to the axis (AA) of the cylindrical length (10) in order to make it define a first given contact arc (18) around the length (10) of the rod and to adopt a more distant position without contact.

2. Device according to claim 1, comprising a second drive roller able to coil up a band (16'), a second driven roller able to uncoil the band (16'), the second rollers being rotational on axes parallel to the axis (AA) of the cylindrical length (10) and offset from the first rollers (24, 26) along the axis (AA) of the cylindrical length (10), and second band positioning means located on the passage of the band (16') circulating between the two second rollers and around the cylindrical length (10), adapted to move the band (16') radially with respect to the axis (AA) of the cylindrical length (10) and to make it define a second given contact arc (18') around the cylindrical length (10) and to adopt a more distant position without contact.

3. Device according to claim 2, in which the first and second contact arcs (18, 18') are located in two different radial planes of the cylindrical length (10).

4. Device according to claim 3, in which the second arc (18') forms an identical angle (α') to the first arc (18).

5. Device according to one of claims 1 to 4, in which the means (28, 30) of positioning the band or bands (16, 16') comprise a rocker (30) for fixing the tension of the band or bands (16, 16').

6. Device according to one of claims 1 to 5, in which at least one driven roller (24) comprises a brake.

7. Device according to one of claims 1 to 6, comprising at least one band rupture sensor.

8. Device according to one of claims 1 to 7, comprising a nozzle (22) for injecting liquid onto a band (16, 16').

9. Device according one of claims 1 to 8, also comprising means (32) of guiding the cylindrical length (10) in a translation movement along its axis (AA).

10. Device according to claim 9, in which the guide means (32) are able to maintain the cylindrical length (10) in a plurality of given angular positions.

11. Device according to one of claims 9 to 10, comprising means for determining the speed of rotation of the drive rollers (26), and the speed of movement of the guide means (32).

12. Device according to one of claims 9 to 11, comprising a sensor (34) for the position of the cylindrical length (10) with a respect to its movement axis (AA).

13. Device according one of claims 1 to 12, associated with a glove box (2) in which it is located.

14. Method for the automatic peripheral decontamination of a length (10) of a nuclear fuel rod (1) extending longitudinally along its axis (AA) between first and second ends (12, 14), by means of at least one band (16) moving in a plane perpendicular to the axis (AA) of the rod (1), comprising the following steps:
- the automated positioning of the band around the axis (AA) of the rod (1) at a distance greater than the radius of the rod (1);
- the automated positioning of the first end (14) of the length (10) at a given position on the axis of the rod (AA);
- the automated putting in contact of the band (16) around a first arc (18) of the rod (1);
- the movement of the band (16) in a plane perpendicular to the axis (AA) of the rod such that its tension on the length (10) remains unchanged.

15. Method according to claim 14, comprising the cleaning by a second band (16') put in contact around a second arc (18') of the rod (1) downstream of the first end (14).

16. Method according to claim 15, in which the first and second arcs (18, 18') each form an angle of 180°.

17. Method according to one of claims 15 or 16, in which the movements of the first and second bands (16, 16') have equal speeds and tensions.

18. Method according to one of claims 14 to 17, also comprising the movement of the rod (1) along its axis (AA) towards the second end (12).

19. Method according to one of claims 14 to 18, also comprising the injection of liquid onto the band or bands (16, 16') for a given period.
